# FASCICULE DE BREVET EUROPEEN

(11) **EP 3 461 681 B1**
(45) Date de publication et mention de la délivrance du brevet: **01.07.2020**
(21) Numéro de dépôt: 18188347.1
(22) Date de dépôt: 09.08.2018
(51) Int. Cl.: B60N 2/02, B60N 2/06

(54) **MÉCANISME DE RÉGLAGE À VIS, GLISSIÈRE COMPORTANT UN TEL MÉCANISME DE RÉGLAGE ET SIÈGE COMPORTANT UNE TELLE GLISSIÈRE**
SCHRAUBVERSTELLUNGSMECHANISMUS, GLEITSCHIENE, DIE EINEN SOLCHEN VERSTELLUNGSMECHANISMUS UMFASST, UND SITZ, DER EINE SOLCHE GLEITSCHIENE UMFASST
SCREW ADJUSTMENT MECHANISM, SLIDE COMPRISING SUCH AN ADJUSTMENT MECHANISM AND SEAT COMPRISING SUCH A SLIDE

(30) Priorité: 29.09.2017 FR 1759116
(43) Date de publication de la demande: 03.04.2019
(73) Titulaire: FAURECIA Sièges d'Automobile, 92000 Nanterre (FR)
(72) Inventeur: REY, Jean-Noël, 61100 Flers (FR)
(74) Mandataire: Plasseraud IP

(56) Documents cités:
- WO-A1-2011/150489
- FR-A1- 2 882 974
- US-A1- 2015 367 752

## Description

### DOMAINE DE L'INVENTION

La présente invention est relative aux mécanismes de réglage à vis, aux glissières comportant de tels mécanismes et aux sièges comportant de telles glissières.

### ARRIERE-PLAN DE L'INVENTION

Plus particulièrement, l'invention concerne un mécanisme de réglage à vis, comprenant :
- une vis qui s'étend selon un axe longitudinal,
- un support ayant des première et deuxième parois transversales sensiblement perpendiculaires à l'axe longitudinal,
- un carter monté sur le support entre les première et deuxième parois transversales dudit support, ledit carter ayant des première et deuxième faces d'extrémité disposées respectivement en regard desdites première et deuxième parois transversales dudit support et ledit carter ayant un logement d'écrou qui s'étend selon ledit axe longitudinal et débouche au niveau des première et deuxième faces d'extrémité du carter respectivement par des première et deuxième ouvertures opposées, la vis traversant les première et deuxième ouvertures,
- un premier tampon d'élastomère interposé en compression entre la première paroi transversale du support et la première face d'extrémité du carter,
- un deuxième tampon d'élastomère interposé entre la deuxième paroi transversale du support et la deuxième face d'extrémité du carter,
- un écrou vissé sur ladite vis, l'écrou étant monté rotatif dans le logement d'écrou du carter,
- un palier engagé dans la deuxième ouverture du carter et traversé par la vis, l'écrou étant en butée axiale rigide contre le palier en direction de la deuxième ouverture.

Le document FR2882974A1 décrit un mécanisme de réglage de ce type, qui donne toute satisfaction quant à son fonctionnement. Dans le mécanisme de réglage du document FR2882974A1, le palier est monté sans jeu sur la vis, traverse le deuxième tampon d'élastomère et est en butée contre la deuxième paroi transversale du support. Ce mécanisme comporte en outre un palier supplémentaire monté sans jeu sur la vis, traversant la première ouverture du carter et le premier tampon d'élastomère, le palier supplémentaire étant interposé entre l'écrou et la première paroi transversale du support. L'écrou est monté sans jeu entre les paliers.

### OBJETS ET RESUME DE L'INVENTION

La présente invention a notamment pour but de perfectionner encore les mécanismes de réglage de ce type, notamment pour en diminuer la complexité et le coût.

A cet effet, selon l'invention, un mécanisme de réglage du genre en question est caractérisé en ce que l'écrou est en butée axiale rigide contre le carter en direction de la première ouverture et le palier est en butée axiale élastique contre le deuxième tampon d'élastomère.

Par « butée rigide », on entend ici une butée sans rattrapage de jeu élastique, éventuellement avec interposition d'éléments rigides tels qu'une rondelle ou autre entre les deux éléments en butée rigide.

Par « butée élastique », on entend ici une butée permettant un rattrapage de jeu élastique, en l'occurrence grâce à l'élasticité du tampon en élastomère.

Grâce à ces dispositions, l'ensemble des rattrapages de jeux du mécanisme dans la direction longitudinale est effectué par les premier et deuxième tampons d'élastomère, de façon simple et peu coûteuse. On évite ainsi notamment de traiter d'une part le rattrapage de jeu entre le carter et le support et d'autre part le rattrapage de jeu de l'écrou à l'intérieur du carter, par deux systèmes de rattrapage de jeux indépendants.

Dans des modes de réalisation préférés du mécanisme de réglage selon l'invention, on peut éventuellement avoir recours en outre à l'une et/ou à l'autre des dispositions suivantes :
- l'écrou et le palier sont conformés pour être emboîtés axialement dans le carter par la deuxième ouverture dudit carter ;
- le carter est monobloc (on simplifie ainsi la structure du carter et son montage, et on diminue encore le coût du mécanisme, par rapport au mécanisme du document FR2882974A1) ;
- l'écrou comporte des première et deuxième extrémités cylindriques, la première extrémité cylindrique tourillonnant dans un alésage du carter et la deuxième extrémité cylindrique étant emboîtée dans le palier ;
- le palier comporte une collerette interposée entre la deuxième face d'extrémité du carter et le deuxième tampon d'élastomère, un jeu axial étant ménagé entre ladite collerette et la deuxième face d'extrémité du carter ;
- ladite collerette présente un bord non-circulaire qui coopère avec un rebord appartenant à la deuxième face d'extrémité du carter, pour immobiliser en rotation le palier par rapport au carter ;
- une rondelle rigide est interposée axialement entre l'écrou et le palier ;
- le palier est en matériau rigide, par exemple métallique.

Par ailleurs l'invention a également pour objet une glissière comportant un mécanisme de réglage tel que défini ci-dessus, un profilé fixe et un profilé mobile solidaire du support du mécanisme de réglage et monté coulissant par rapport au profilé fixe parallèlement audit axe longitudinal, la vis du mécanisme de réglage étant solidarisée avec le profilé fixe.

Enfin, l'invention a également pour objet un siège de véhicule comportant au moins une glissière telle que définie ci-dessus et une assise solidaire du premier élément de glissière profilé mobile de ladite glissière.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- les figures 1 et 2 sont des vues schématiques, respectivement de côté et de face, d'un siège pouvant inclure des glissières selon l'invention,
- la figure 3 est une vue en perspective de l'une des glissières du siège des figures 1 et 2,
- la figure 4 est une vue similaire à la figure 3, sans le profilé mobile de la glissière,
- la figure 5 est une vue en perspective montrant le mécanisme de réglage à vis de la glissière des figures 3 et 4,
- la figure 6 est une vue éclatée du mécanisme de réglage de la figure 5,
- et la figure 7 est une vue en coupe axiale verticale du mécanisme de réglage des figures 5 et 6.

### DESCRIPTION PLUS DETAILLEE

Sur les différentes figures, les mêmes références désignent des éléments identiques ou similaires.

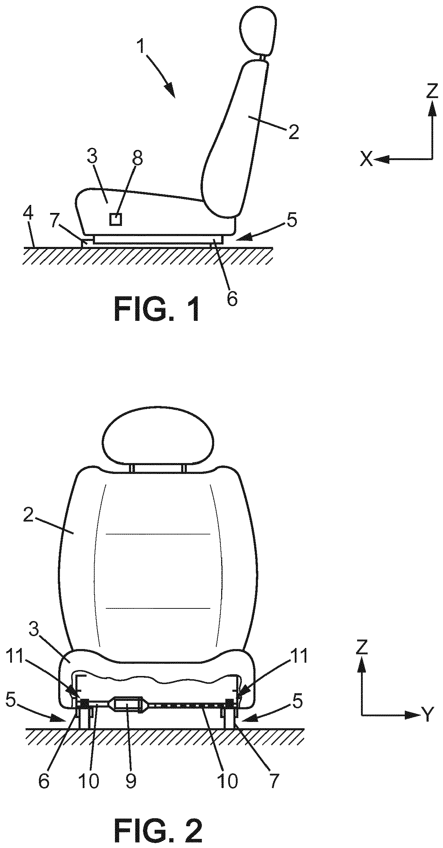

La figure 1 représente un siège de véhicule automobile 1 qui comprend un dossier 2 porté par une assise 3 elle-même montée coulissante sur le plancher 4 du véhicule, dans une direction longitudinale X sensiblement horizontale.

L'assise 3 est reliée au plancher 4 par deux glissières parallèles 5, dont une seule est visible sur la figure 1.

Comme représenté sur la figure 2, chacune des glissières 5 comporte des premier et deuxième éléments de glissière 6, 7, formés respectivement par un profilé métallique fixe 6 lié au plancher 4 et un profilé métallique mobile 7 lié à l'assise 3, qui coulissent l'un sur l'autre dans la direction longitudinale X.

Les glissières 5 des sièges sont ici des glissières motorisées électriques, commandées par exemple au moyen d'un bouton 8 (figure 1) disposé par exemple sur le côté de l'assise du siège qui commande un moteur électrique 9 entraînant (par exemple par des flexibles 10) respectivement des mécanismes de réglage 11 des deux glissières 5 (figure 2).

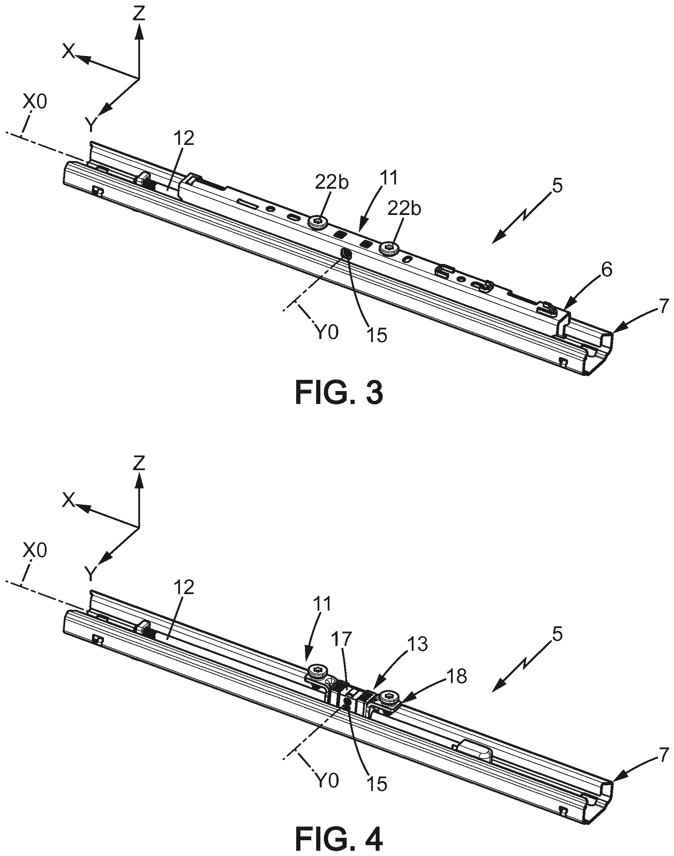

Comme représenté sur les figures 3 et 4, le mécanisme de réglage 11 de chaque glissière est un mécanisme de réglage à vis, comportant une vis 12 solidaire du profilé fixe 7 et s'étendant selon un axe longitudinal X0 parallèle à la direction longitudinale X susmentionnée.

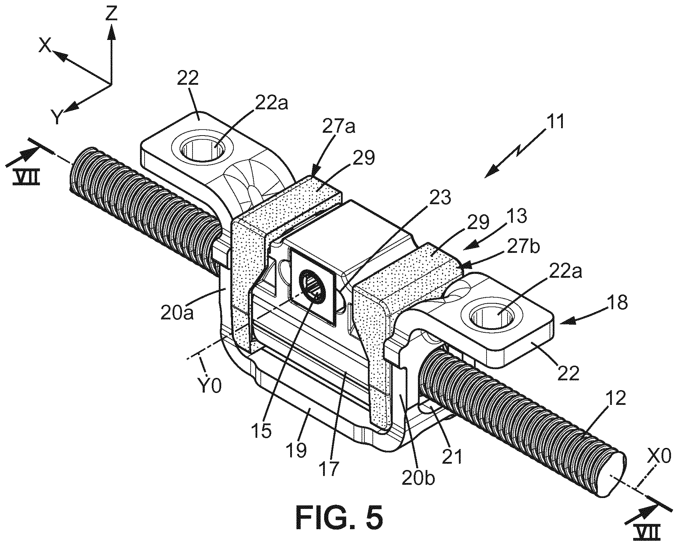

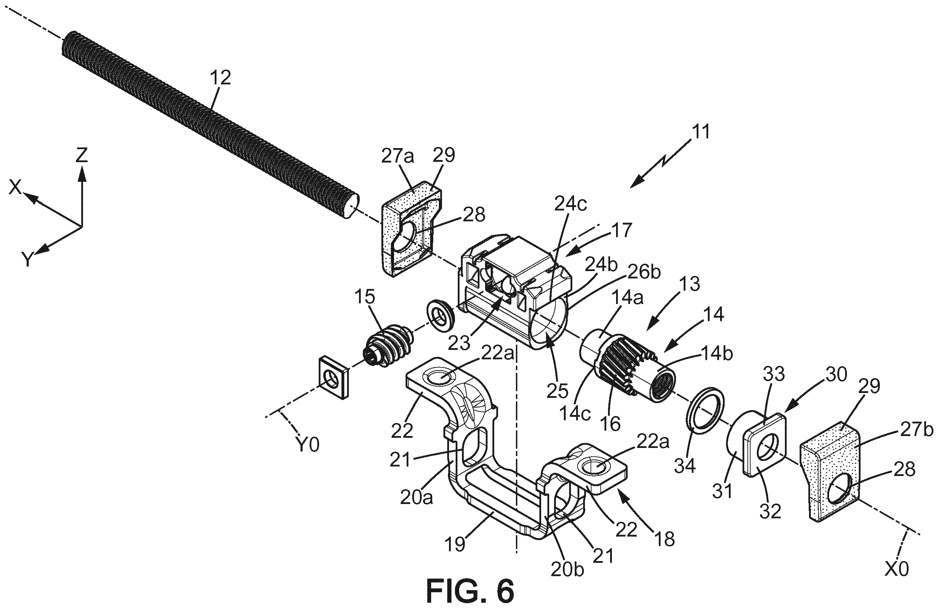

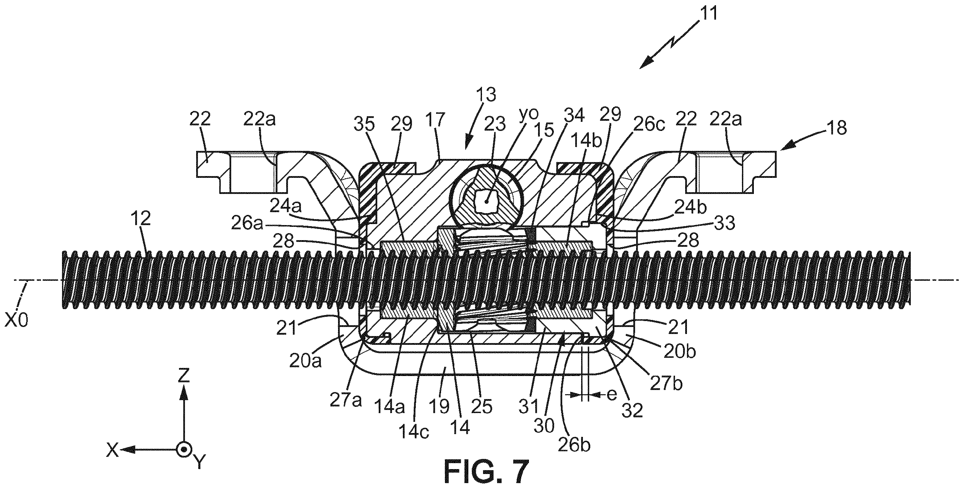

Le mécanisme de réglage 11 comporte en outre un dispositif de transmission 13 pouvant être disposé à l'intérieur du profilé mobile 6. Le dispositif de transmission 13 comporte un écrou 14 vissé sur la vis 12 et monté rotatif autour de l'axe longitudinal X0 de la vis 12, comme bien visible sur les figures 5 à 7.

L'écrou 14 peut être commandé en rotation par exemple par une vis sans fin 15 qui engraine avec une denture externe 16 de l'écrou 14. La vis sans fin 15 peut être rotative autour d'un axe transversal Y0 parallèle à une direction transversale horizontale Y perpendiculaire à la direction longitudinale X.

La vis sans fin 15 peut être entraînée en rotation par le moteur 9 par l'intermédiaire des flexibles 10 ou autres, lesquels traversent la paroi latérale du profilé mobile 6.

La vis sans fin 15 et l'écrou 14 peuvent être montés rotatifs dans un carter 17 rigide (par exemple métallique) porté par un support 18 rigide.

Le support 18 peut présenter une forme de berceau présentant une base horizontale 19 sur laquelle repose le carter 17. La base horizontale s'étend selon la direction longitudinale X entre deux extrémités prolongées respectivement par des première et deuxième parois transversales 20a, 20b. Les première et deuxième parois transversales 20a, 20b s'étendent selon la direction transversale Y et selon une direction verticale Z. Les première et deuxième parois transversales 20a, 20b peuvent comporter chacune un évidement traversé par la vis 12.

Les première et deuxième parois transversales 20a, 20b peuvent être prolongées horizontalement par deux pattes de fixation opposées 22 qui peuvent être fixées sous la paroi supérieure du profilé mobile (par exemple par des vis 22b vissées dans des trous 22a des pattes de fixation), comme représenté sur les figures 3 à 5.

Le carter 17 peut être monobloc. Il peut être notamment métallique.

Comme représenté sur les figures 5 à 7, le carter 17 peut comporter un logement 23 de vis sans fin dans lequel la vis sans fin 15 est montée rotative.

Le carter 17 peut présenter des première et deuxième faces d'extrémité 24a, 24b disposées respectivement en regard desdites première et deuxième parois transversales 20a, 20b du support 18.

Le carter 17 comporte un logement d'écrou 25 qui s'étend selon l'axe longitudinal X0 et débouche au niveau des première et deuxième faces d'extrémité 24a, 24b du carter respectivement par des première et deuxième ouvertures 26a, 26b opposées, la vis 12 traversant les première et deuxième ouvertures 26a, 26b.

Le dispositif de transmission 13 peut en outre comporter un premier tampon d'élastomère 27a interposé en compression entre la première paroi transversale 20a du support et la première face d'extrémité 24a du carter (en contact direct ou non avec la première paroi transversale 20a du support et la première face d'extrémité 24a du carter).

Le dispositif de transmission 13 peut également comporter un deuxième tampon d'élastomère 27b interposé entre la deuxième paroi transversale 20b du support et la deuxième face d'extrémité 24b du carter (en contact ou non avec la deuxième face d'extrémité 24b du carter). Eventuellement, le deuxième tampon d'élastomère 27b peut être comprimé entre la deuxième paroi transversale 20b du support et la deuxième face d'extrémité 24b du carter (en contact direct ou non avec la deuxième paroi transversale 20b du support et la deuxième face d'extrémité 24b du carter).

Chaque tampon d'élastomère 27a, 27b peut se présenter sous la forme d'une plaque d'élastomère perpendiculaire à l'axe X0, le cas échant percée d'une ouverture 28 traversée par la vis 12. Chaque tampon d'élastomère 27a, 27b peut éventuellement comporter un retour 29 englobant partiellement le carter 17, notamment vers le haut.

Le dispositif de transmission 13 peut également comporter un palier 30, engagé dans la deuxième ouverture 24b du carter et traversé par la vis 12. Le palier 30 peut être en matériau rigide, notamment en métal.

Le palier 30 peut être en forme de bague. Il peut comporter un corps cylindrique 31 qui pénètre dans le logement d'écrou 25 par la deuxième ouverture 26b, et une collerette élargie 32 qui est disposée en regard de la deuxième face d'extrémité 24b du carter, avec un certain jeu e par exemple de l'ordre de 1 à quelques mm. La collerette 32 est interposée axialement entre la deuxième face 26b du carter et le deuxième tampon d'élastomère 27b. Ladite collerette 32 peut présenter un bord 33 non-circulaire (par exemple rectiligne) qui coopère avec un rebord 24c correspondant appartenant à la deuxième face d'extrémité 26b du carter, pour immobiliser en rotation le palier 30 par rapport au carter 17.

L'écrou 14 est en butée axiale rigide contre l'extrémité libre du corps cylindrique 31 du palier (le cas échéant avec interposition d'une rondelle rigide 34) et en butée axiale rigide contre le carter en direction de la première ouverture 26a, tandis que la collerette 32 du palier est en butée axiale élastique contre le deuxième tampon d'élastomère 27b, qui est ainsi comprimé entre le palier 30 et la deuxième paroi transversale 20b du support 20.

D'autres rondelles ou bagues paliers peuvent être prévues notamment de part et d'autre de l'écrou 14 pour diminuer la friction et l'usure.

L'écrou 14 peut comporter des première et deuxième extrémités cylindriques 14a, 14b. La première extrémité cylindrique 14a peut tourillonner dans un alésage 35 du carter. La deuxième extrémité cylindrique 14b peut être emboîtée dans le corps cylindrique 31 du palier 30.

Ladite butée axiale rigide de l'écrou 14 contre le carter 17 en direction de la première ouverture 26a, peut être obtenue par exemple par contact axial entre la première extrémité cylindrique 14a et une partie correspondante du carter, et / ou par contact axial entre un épaulement 14c délimitant ladite première extrémité cylindrique 14a, et une partie correspondante du carter.

L'écrou 14 et le palier 30 peuvent être conformés pour être emboîtés axialement dans le carter 17 par la deuxième ouverture 26b dudit carter.

Le dispositif de transmission 13 est particulièrement résistant du fait de la structure monobloc du carter 17 et du fait que les tampons d'élastomère 27a, 27b assurent à la fois le rattrapage de jeu entre le carter 17 et le support 18 et le rattrapage de jeu entre l'écrou 14 et le carter 17.

## Revendications

1. Mécanisme de réglage (11) à vis, comprenant :
- une vis (12) qui s'étend selon un axe longitudinal (X0),
- un support (18) ayant des première et deuxième parois transversales (20a, 20b) sensiblement perpendiculaires à l'axe longitudinal (X0),
- un carter (17) monté sur le support (18) entre les première et deuxième parois transversales (20a, 20b) dudit support, ledit carter ayant des première et deuxième faces d'extrémité (24a, 24b) disposées respectivement en regard desdites première et deuxième parois transversales (20a, 20b) dudit support et ledit carter ayant un logement d'écrou (25) qui s'étend selon ledit axe longitudinal (X0) et débouche au niveau des première et deuxième faces d'extrémité (24a, 24b) du carter respectivement par des première et deuxième ouvertures (26a, 26b) opposées, la vis (12) traversant les première et deuxième ouvertures (26a, 26b),
- un premier tampon d'élastomère (27a) interposé en compression entre la première paroi transversale (20a) du support et la première face d'extrémité (24a) du carter,
- un deuxième tampon d'élastomère (27b) interposé entre la deuxième paroi transversale (20b) du support et la deuxième face d'extrémité (24b) du carter,
- un écrou (14) vissé sur ladite vis (12), l'écrou (14) étant monté rotatif dans le logement d'écrou (25) du carter,
- un palier (30) engagé dans la deuxième ouverture (26b) du carter et traversé par la vis (12), l'écrou (14) étant en butée axiale rigide contre le palier (30) en direction de la deuxième ouverture (26b),
**caractérisé en ce que** l'écrou (14) est en butée axiale rigide contre le carter (17) en direction de la première ouverture (26a) et le palier (30) est en butée axiale élastique contre le deuxième tampon d'élastomère (27b).

2. Mécanisme de réglage selon la revendication 1, dans lequel l'écrou (14) et le palier (30) sont conformés pour être emboîtés axialement dans le carter (17) par la deuxième ouverture (26b) dudit carter.

3. Mécanisme de réglage selon la revendication 2, dans lequel le carter (17) est monobloc.

4. Mécanisme de réglage selon l'une quelconque des revendications précédentes, dans lequel l'écrou (14) comporte des première et deuxième extrémités cylindriques (14a, 14b), la première extrémité cylindrique (14a) tourillonnant dans un alésage (35) du carter et la deuxième extrémité cylindrique (14a) étant emboîtée dans le palier.

5. Mécanisme de réglage selon l'une quelconque des revendications précédentes, dans lequel le palier (30) comporte une collerette (32) interposée entre la deuxième face d'extrémité (24b) du carter et le deuxième tampon d'élastomère (27b), un jeu axial (e) étant ménagé entre ladite collerette (32) et la deuxième face d'extrémité (24b) du carter.

6. Mécanisme de réglage selon la revendication 5, dans lequel ladite collerette (32) présente un bord (33) non-circulaire qui coopère avec un rebord (24c) appartenant à la deuxième face d'extrémité (24b) du carter, pour immobiliser en rotation le palier (30) par rapport au carter (17).

7. Mécanisme de réglage selon l'une quelconque des revendications précédentes, dans lequel une rondelle rigide (34) est interposée axialement entre l'écrou (14) et le palier (30).

8. Mécanisme de réglage selon l'une quelconque des revendications précédentes, dans lequel le palier (30) est en matériau rigide.

9. Glissière (5) comportant un mécanisme de réglage (11) selon l'une quelconque des revendications précédentes, un profilé fixe (7) et un profilé mobile (6) solidaire du support (18) du mécanisme de réglage (11) et monté coulissant par rapport au profilé fixe (7) parallèlement audit axe longitudinal (X0), la vis (12) du mécanisme de réglage étant solidarisée avec le profilé fixe (7).

10. Siège (1) de véhicule comportant au moins une glissière (5) selon la revendication 9 et une assise (3) solidaire du profilé mobile (6) de ladite glissière.

## Patentansprüche

1. Schrauben-Einstellmechanismus (11), umfassend:
- eine Schraube (12), die sich entlang einer Längsachse (X0) erstreckt,
- einen Träger (18) mit einer ersten und einer zweiten Querwand (20a, 20b) im Wesentlichen senkrecht zur Längsachse (X0);
- ein Gehäuse (17), das an dem Träger (18) zwischen der ersten und der zweiten Querwand (20a, 20b) des Trägers angebracht ist, wobei das Gehäuse eine erste und eine zweite Endfläche (24a, 24b) aufweist, die jeweils gegenüber der ersten und zweiten Querwand (20a, 20b) des Trägers angeordnet sind, und wobei das Gehäuse eine Mutter-Aufnahme (25) aufweist, die sich entlang der Längsachse (X0) erstreckt und auf Höhe der ersten und zweiten Endfläche (24a, 24b) des Gehäuses jeweils in eine erste und eine zweite Öffnung (26a, 26b) mündet, die einander gegenüber liegen, wobei die Schraube (12) durch die erste und die zweite Öffnung (26a, 26b) hindurch verläuft;
- ein erstes Elastomer-Kissen (27a), das unter Druck zwischen der ersten Querwand (20a) des Trägers und der ersten Endfläche (24a) des Gehäuses angeordnet ist;
- ein zweites Elastomer-Kissen (27b), das zwischen der zweiten Querwand (20b) des Trägers und der zweiten Endfläche (24b) des Gehäuses angeordnet ist;
- eine Mutter (14), die auf die Schraube (12) geschraubt ist, wobei die Mutter (14) drehbar in der Mutter-Aufnahme (25) des Gehäuses montiert ist;
- ein Lager (30), das in die zweite Öffnung (26b) des Gehäuses eingreift und von der Schraube (12) durchquert wird, wobei die Mutter (14) sich in Richtung der zweiten Öffnung (26b) in einer starren axialen Anlage an dem Lager (30) befindet,
**dadurch gekennzeichnet, dass** sich die Mutter (14) in Richtung der ersten Öffnung (26a) in einer starren axialen Anlage an dem Gehäuse (17) befindet und sich das Lager (30) in einer elastischen axialen Anlage an dem zweiten Elastomer-Kissen (27b) befindet.

2. Einstellmechanismus nach Anspruch 1, wobei die Mutter (14) und das Lager (30) dazu angepasst sind, durch die zweite Öffnung (26b) des Gehäuses axial in das Gehäuse (17) eingesetzt zu werden.

3. Einstellmechanismus nach Anspruch 2, wobei das Gehäuse (17) einteilig ist.

4. Einstellmechanismus nach einem der vorhergehenden Ansprüche, wobei die Mutter (14) ein erstes und ein zweites zylindrisches Ende (14a, 14b) aufweist, wobei sich das erste zylindrische Ende (14a) in einer Bohrung (35) des Gehäuses dreht und das zweite zylindrische Ende (14b) in das Lager eingesetzt ist.

5. Einstellmechanismus nach einem der vorhergehenden Ansprüche, wobei das Lager (30) einen Flansch (32) umfasst, der zwischen der zweiten Endfläche (24b) des Gehäuses und dem zweiten Elastomer-Kissen (27b) angeordnet ist, wobei ein axiales Spiel (e) zwischen dem Flansch (32) und der zweiten Endfläche (24b) des Gehäuses ausgebildet ist.

6. Einstellmechanismus nach Anspruch 5, wobei der Flansch (32) einen nichtkreisförmigen Rand (33) aufweist, der mit einer Kante (24c) zusammenwirkt, die zur zweiten Endfläche (24b) des Gehäuses gehört, um das Lager (30) relativ zum Gehäuse (17) gegenüber einer Drehung zu immobilisieren.

7. Einstellmechanismus nach einem der vorhergehenden Ansprüche, wobei eine starre Unterlegscheibe (34) axial zwischen der Mutter (14) und dem Lager (30) angeordnet ist.

8. Einstellmechanismus nach einem der vorhergehenden Ansprüche, wobei das Lager (30) aus starrem Material besteht.

9. Schiene (5), umfassend einen Einstellmechanismus (11) gemäß einem der vorhergehenden Ansprüche, ein festes Profil (7) und ein bewegliches Profil (6), das fest mit dem Träger (18) des Einstellmechanismus (11) verbunden ist und relativ zum festen Profil (7) parallel zur Längsachse (X0) verschiebbar montiert ist, wobei die Schraube (12) des Einstellmechanismus am festen Profil (7) befestigt ist.

10. Fahrzeugsitz (1) mit mindestens einer Schiene (5) nach Anspruch 9 und einem Sitz (3), der fest mit dem beweglichen Profil (6) der Schiene verbunden ist.

## Claims

1. Screw-based adjustment mechanism (11), comprising:
- a screw (12) which extends along a longitudinal axis (X0),
- a support (18) having first and second transverse walls (20a, 20b) substantially perpendicular to the longitudinal axis (X0),
- a casing (17) mounted on the support (18) between the first and second transverse walls (20a, 20b) of said support, said casing having first and second end faces (24a, 24b) respectively arranged facing said first and second transverse walls (20a, 20b) of said support, and said casing having a nut housing (25) which extends along said longitudinal axis (X0) and opens at the first and second end faces (24a, 24b) of the casing in respective and opposite first and second openings (26a, 26b), the screw (12) passing through the first and second openings (26a, 26b),
- a first elastomer pad (27a) interposed in compression between the first transverse wall (20a) of the support and the first end face (24a) of the casing,
- a second elastomer pad (27b) interposed between the second transverse wall (20b) of the support and the second end face (24b) of the casing,
- a nut (14) screwed onto said screw (12), the nut (14) being rotatably mounted in the nut housing (25) of the casing,
- a bearing (30) engaged in the second opening (26b) of the casing and traversed by the screw (12), the nut (14) being in rigid axial abutment against the bearing (30) in the direction of the second opening (26b),
**characterized in that** the nut (14) is in rigid axial abutment against the casing (17) in the direction of the first opening (26a) and the bearing (30) is in elastic axial abutment against the second elastomer pad (27b).

2. Adjustment mechanism according to claim 1, wherein the nut (14) and the bearing (30) are shaped so as to fit axially into the casing (17) through the second opening (26b) of said casing.

3. Adjustment mechanism according to claim 2, wherein the casing (17) is a single piece.

4. Adjustment mechanism according to any one of the preceding claims, wherein the nut (14) comprises first and second cylindrical ends (14a, 14b), the first cylindrical end (14a) rotating within a bore (35) of the casing and the second cylindrical end (fitting into the bearing.

5. Adjustment mechanism according to any one of the preceding claims, wherein the bearing (30) comprises a flange (32) interposed between the second end face (24b) of the casing and the second elastomer pad (27b), axial clearance (e) being provided between said flange (32) and the second end face (24b) of the casing.

6. Adjustment mechanism according to claim 5, wherein said flange (32) has a non-circular edge (33) which engages with a rim (24c) that is part of the second end face (24b) of the casing, in order to immobilize the bearing (30) rotationally relative to the casing (17).

7. Adjustment mechanism according to any one of the preceding claims, wherein a rigid washer (34) is interposed axially between the nut (14) and the bearing (30).

8. Adjustment mechanism according to any one of the preceding claims, wherein the bearing (30) is made of rigid material.

9. Rail (5) comprising an adjustment mechanism (11) according to any one of the preceding claims, a fixed section (7), and a movable section (6) integral to the support (18) of the adjustment mechanism (11) and mounted so as to slide relative to the fixed section (7) in parallel to said longitudinal axis (X0), the screw (12) of the adjustment mechanism being integral to the fixed section (7).

10. Vehicle seat (1) comprising at least one rail (5) according to claim 9 and a seating portion (3) integral to the movable section (6) of said rail.
